(19) **Europäisches Patentamt**

**European Patent Office**

**Office européen des brevets**

(11) **EP 1 241 066 B1**

(12) **EUROPÄISCHE PATENTSCHRIFT**

(45) Veröffentlichungstag und Bekanntmachung des Hinweises auf die Patenterteilung:
**15.09.2004   Patentblatt 2004/38**

(51) Int Cl.$^7$: **B60T 8/00**

(21) Anmeldenummer: **02001213.4**

(22) Anmeldetag: **17.01.2002**

(54) **Verfahren und Vorrichtung zum Ausregeln der Kurvengeschwindigkeit eines Fahrzeugs**

Method and device for controlling motor vehicle cornering velocity

Méthode et dispositif de contrôle de la vitesse de virage d'un véhicule automobile

(84) Benannte Vertragsstaaten:
**DE FR IT SE**

(30) Priorität: **14.03.2001   DE 10112150**

(43) Veröffentlichungstag der Anmeldung:
**18.09.2002   Patentblatt 2002/38**

(73) Patentinhaber: **WABCO GmbH & Co. OHG**
**30432 Hannover (DE)**

(72) Erfinder:
• **Reich, Thomas**
**30451 Hannover (DE)**

• **Schmidt, Georg**
**22880 Wedel (DE)**

(74) Vertreter: **Schrödter, Manfred**
**WABCO GmbH & Co. OHG,**
**Postfach 91 12 62**
**30432 Hannover (DE)**

(56) Entgegenhaltungen:
**EP-A- 0 914 997        EP-A- 0 945 320**
**DE-A- 19 649 137        DE-A- 19 814 381**
**DE-A- 19 859 953        US-A- 5 206 808**

**Beschreibung**

Die Erfindung betrifft ein Verfahren zum Ausregeln der Kurvengeschwindigkeit eines Fahrzeugs gemäß Oberbegriff des Anspruchs 1 und eine Vorrichtung zur Durchführung des Verfahrens.

Befährt ein Fahrzeug niedrige Reibwerte, kann es bei Lenkmanövern, z. B. zum Befahren einer Kurve oder bei Ausweichmanövern zu Instabilitäten wie Ausbrechen an der Hinterachse kommen, weil die Querkräfte an den Rädern zu gering sind, um ein stabiles Kurvenverhalten zu gewährleisten. Durch geeignete Regeleingriffe muß dieses Übersteuerverhalten kompensiert werden.

Durch die DE 199 07 633 sind ein Verfahren und eine Vorrichtung zur Stabilisierung eines Fahrzeuges, insbesondere zur Vermeidung eines Umkippens eines Fahrzeuges um eine in Längsrichtung des Fahrzeuges orientierte Fahrzeugachse, insbesondere bei Kurvenfahrt bekannt. Hierzu wird eine die Querdynamik des Fahrzeuges beschreibende Größe ermittelt. Diese Größe wird mit wenigstens einem charakteristischen Wert, insbesondere einem Schwellenwert für diese Größe verglichen. Ist die die Querdynamik des Fahrzeuges beschreibende Größe größer als der charakteristische Wert oder gleich dem charakteristischen Wert, wird die Geschwindigkeit des Fahrzeuges wenigstens durch Bremseingriffe an wenigstens einem Rad und/oder durch Motoreingriffe, durch die das vom Motor abgegebenen Moment reduziert wird, und/oder durch Retardereingriffe auf einen vorgebbaren Kurvengeschwindigkeitsgrenzwert reduziert oder auf einem vorgegebenen Kurvengeschwindigkeitsgrenzwert gehalten. Als die Querdynamik beschreibende Größe wird eine die Querbeschleunigung beschreibende Größe verwendet, welche in Abhängigkeit von der Fahrzeuggeschwindigkeit und dem Lenkwinkel ermittelt wird. Zur genauen Bestimmung des Kurvengeschwindigkeitsgrenzwertes ist es notwendig, den Reibwert zu kennen. Liegen inhomogene Reibwerte vor, müßte für jedes Rad der Reibwert bestimmt werden. Außerdem ist der Kurvengeschwindigkeitsgrenzwert, bei dem das Rad seine Seitenführung ganz oder teilweise verliert, auch vom Antriebs- und Bremsschlupf abhängig. Da diese Parameter bei dem bekannten Verfahren und der bekannten Vorrichtung nicht berücksichtigt sind, sind das Verfahren und die Vorrichtung nur bedingt in der Praxis tauglich. der Praxis tauglich.

Aus der DE 198 14 381 A1 ist ein Stabilitätssteuerungs- bzw. -regelsystem für ein Kraftfahrzeug bekannt. Bei zu schneller Fahrt in Kurven erfolgt eine Stabilisierung durch Bremsung einzelner Räder. Eine gleichzeitige Bremsung durch den Fahrer und der eingestellte Lenkwinkel werden dabei berücksichtigt. Ein gewisser Rutschwinkel zwischen der Fahrzeuglängsachse und der Fahrzeugbewegungsrichtung wird dabei zur Erzielung einer sportlichen Fahrweise zugelassen.

Weiter ist aus der EP 0 945 320 A1 ein Verfahren zum Regeln des dynamischen Verhaltens eines Straßenfahrzeugs bekannt. Hierbei wird eine Abweichung des Fahrzeugs während einer Kurvenfahrt aus dem Lenkwinkel, der aktuellen Fahrzeug-Längsgeschwindigkeit und aus einem in Echtzeit bestimmten Wert der Querbeschleunigung bestimmt. Aus diesen Werten wird eine Reduktion des Motormomentes zur Verringerung der Längsgeschwindigkeit des Fahrzeugs berechnet.

Weiter ist aus der EP 0 914 997 A2 ein Bremssystem bekannt, bei welchem eine Abweichung zwischen einer aktuellen Gierrate eines Fahrzeugs und einer gewünschten Gierrate bestimmt wird, und ein Brems-Eingriff an einzelnen Rädern des Fahrzeugs durchgeführt wird, um damit den Gierwinkel zu verringern.

Aus der DE 196 49 137 A1 ist weiter ein Verfahren zur Regelung des dynamischen Verhaltens eines Kraftfahrzeuges bekannt, bei dem für die Ermittlung der Soll-Giergeschwindigkeit Kurvenradien der befahrenen Strecke aus abgespeicherten Datensätzen übernommen werden, wobei die Kurvenradien entweder den Lenkwinkel vollständig ersetzen oder für eine Validierung des Lenkwinkels genutzt werden. Durch einen Brems- oder Motoreingriff wird eine Angleichung der Ist-Giergeschwindigkeit an die Soll-Giergeschwindigkeit erreicht.

Schließlich ist aus der DE 198 59 953 A1 eine Vorrichtung zur Stabilisierung eines aus einem Zugfahrzeug und einem Anhänger bestehenden Fahrzeuggespannes bekannt. Die Vorrichtung enthält erste Ermittlungsmittel, mit denen eine Knickwinkelgröße ermittelt wird. Durch die Aufbringung von Bremsdruck an einzelnen Rädern des Anhängers wird eine Stabilisierung des Fahrzeuggespannes in Abhängigkeit vom Knickwinkel erreicht.

Die Aufgabe der vorliegenden Erfindung besteht darin, ein einfaches, effektives und praxisgerechtes Verfahren zum Ausregeln einer Kurvengeschwindigkeit eines Fahrzeuges anzugeben, bei der das Fahrzeug eine Kurve stabil mit maximaler Traktion befahren kann, sowie eine Vorrichtung zur Durchführung des Verfahrens anzugeben.

Die Aufgabe wird durch das Verfahren gemäß Anspruch 1 gelöst. Eine Vorrichtung zur Durchführung des Verfahrens ist im Anspruch 6 angegeben.

Vorteilhafte und zweckmäßige Weiterbildungen der Erfindung sind in den Unteransprüchen angegeben.

Das erfindungsgemäße Verfahren stellt eine einfache, effektive und praxisgerechte Möglichkeit zum Ausregeln einer optimalen Fahrzeugkurvengeschwindigkeit dar, indem durch Motorregelung in Abhängigkeit vom Schwimmwinkel eine Sollgeschwindigkeit des Fahrzeuges proportional zum Schwimmwinkel geregelt wird.

Die Erfindung soll nachfolgend anhand des beigefügten Blockdiagramms näher erläutert werden.

Mit Hilfe nicht dargestellter Sensoren werden laufend die Querbeschleunigung $a_q$, die Gierwinkelgeschwindigkeit $\omega$ und die Fahrzeug-Istgeschwindigkeit $v_F$ ermittelt. Aus der Querbeschleunigung $a_q$ und der Gierwinkelgeschwindigkeit $\omega$ wird der jeweilige Schwimmwinkel $\beta$ berechnet gemäß nachstehender Formel

$$\beta = \int (\omega - \frac{a_q}{v_F})\, dt.$$

Der Schwimmwinkel $\beta$ ist der Winkel zwischen Fahrzeuglängsachse und Bewegungsrichtung.

Der aktuelle, berechnete Schwimmwinkel $\beta$ wird in einem Schwellwertkreis 2 mit einem vorbestimmten Schwimmwinkel-Schwellwert $\beta_S$ verglichen. Überschreitet der Schwimmwinkel den vorbestimmten Schwellwert, wird der Schwimmwinkel in einem Schaltkreis 4 mit einer Konstanten K gewichtet und einer Summierstelle 6 als Korrekturwert für die Sollgeschwindigkeit $v_S$ des Fahrzeuges zugeführt. Die Sollgeschwindigkeit ergibt sich aus der momentanen Fahrzeug-Istgeschwindigkeit $v_F$, die der Summierstelle 6 ebenfalls zugeführt wird. Diese Sollgeschwindigkeit $v_S$ wird proportional zum Schwimmwinkel $\beta$ durch den Korrekturwert reduziert, wenn der Schwimmwinkel den Schwimmwinkel-Schwellwert überschreitet. Die so reduzierte, aus der momentanen Istgeschwindigkeit abgeleitete, Sollgeschwindigkeit des Fahrzeuges wird einer zweiten Summierstelle 8 zusammen mit der Fahrzeug-Istgeschwindigkeit $v_F$ zugeführt. Die sich in der Summierstelle 8 ergebende Regeldifferenz (Soll-Istwert-Differenz) wird einem PD-Regler 10 zugeführt, welcher in das Motormanagement so eingreift, insbesondere das Motormoment so verändert, daß die Istgeschwindigkeit des Fahrzeuges auf die Sollgeschwindigkeit geregelt wird.

Unterschreitet der Schwimmwinkel $\beta$ die festgelegte Schwimmwinkel-Schwelle, wird der Korrekturwert Null und somit die Sollgeschwindigkeit auf die Fahrzeug-Istgeschwindigkeit $v_F$ geführt, indem über die Summierstelle 8 und den PD-Regler 10 das Motormoment wieder freigegeben wird, da kein Regelbedarf mehr vorliegt. Der Fahrer kann wieder Gas geben. Vorzugsweise wird dabei das Motormoment mit einem Gradienten freigegeben , damit es nicht sofort auf den Maximalwert springt.

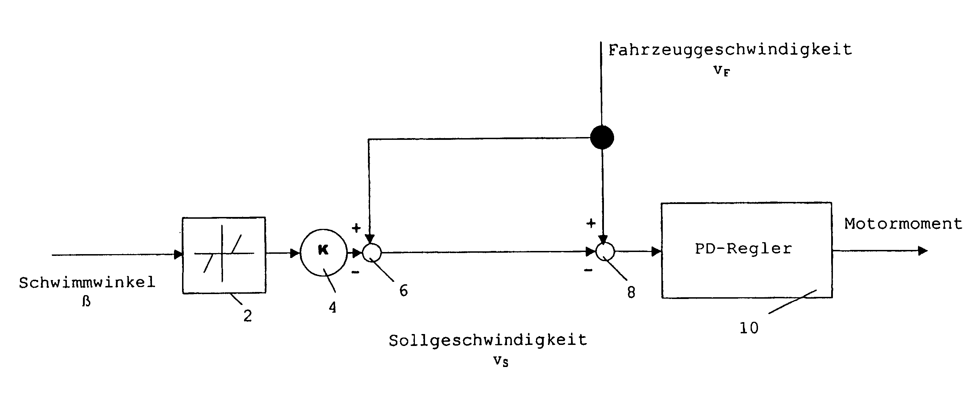

**Patentansprüche**

**1.** Verfahren zum Ausregeln der Kurvengeschwindigkeit eines Fahrzeuges mit Bestimmung der Querbeschleunigung $a_q$ und der Istgeschwindigkeit $v_F$ des Fahrzeuges, ferner mit

- Ermittlung der Gierwinkelgeschwindigkeit $\omega$,
- Bestimmung des Schwimmwinkels $\beta$ zwischen Fahrzeuglängsachse und Bewegungsrichtung aus der Querbeschleunigung $a_q$, der Gierwinkelgeschwindigkeit $\omega$ und der Fahrzeug-Istgeschwindigkeit $v_F$,

**gekennzeichnet durch** folgende Schritte:

- Vergleich des Schwimmwinkels $\beta$ mit einem vorgegebenen Schwimmwinkel-Schwellwert $\beta_S$,
- Berechnung einer reduzierten Sollgeschwindigkeit $v_S$ des Fahrzeugs ausgehend von der Istgeschwindigkeit $v_F$ des Fahrzeuges bei Überschreitung des Schwimmwinkel-Schwellwertes $\beta_S$ **durch** den Schwimmwinkel, wobei die Sollgeschwindigkeit $v_S$ proportional zum Schwimmwinkel $\beta$ reduziert wird.
- Einregelung der Fahrzeug-Istgeschwindigkeit $v_F$ auf die Sollgeschwindigkeit $v_S$.

**2.** Verfahren nach Anspruch 1, **dadurch gekennzeichnet, daß** die Einregelung durch Motoreingriff erfolgt.

**3.** Verfahren nach Anspruch 2, **dadurch gekennzeichnet, daß** als Motoreingriff die Regelung des Motormomentes vorgesehen ist.

**4.** Verfahren nach Anspruch 2, **dadurch gekennzeichnet, daß** bei Unterschreitung des Schwimmwinkel-Schwellwertes $\beta_S$ die Sollgeschwindigkeit $v_S$ des Fahrzeuges wieder auf die Fahrzeug-Istgeschwindigkeit $v_F$ geführt wird, indem der Motoreingriff beendet und das Motormoment wieder freigegeben wird.

**5.** Verfahren nach Anspruch 4, **dadurch gekennzeichnet, daß** die Freigabe des Motormomentes mit einem Gradienten erfolgt.

**6.** Vorrichtung zum Ausregeln der Kurvengeschwindigkeit eines Fahrzeuges mit Sensoren zur Bestimmung der Geschwindigkeit und Querbeschleunigung des Fahrzeuges, ferner aufweisend

- einen Sensor für die Gierwinkelgeschwindigkeit,
- eine Recheneinrichtung zur Berechnung eines Schwimmwinkels $\beta$ zwischen Fahrzeuglängsachse und Bewegungsrichtung aus der Querbeschleunigung $a_q$, der Gierwinkelgeschwindigkeit $\omega$ und der Fahrzeug-Istgeschwindigkeit $v_F$,

**gekennzeichnet durch**

- einen Schwellwertkreis (2) zum Vergleich des Schwimmwinkels $\beta$ mit einem Schwimmwinkel-Schwellwert $\beta_S$,

- einen dem Schwellwertkreis (2) nachgeschalteten Bewichtungskreis (4), welcher ein dem ermittelten Schwimmwinkel β proportionalen Korrekturwert K ermittelt,
- eine erste Summierstelle (6), in der eine Fahrzeugsollgeschwindigkeit $v_S$ von der Fahrzeugistgeschwindigkeit $v_F$ aus um den Korrekturwert K reduziert wird,
- eine zweite Summierstelle (8), in der die Fahrzeug-Istgeschwindigkeit $v_F$ mit der Sollgeschwindigkeit $v_S$ verglichen wird zur Ermittlung eines Regeldifferenzwertes und
- einen PD-Regler (10) zur Regelung des Motormomentes in Abhängigkeit vom Regeldifferenzwert.

## Claims

1. A method of correcting the cornering speed of a vehicle, in which the transverse acceleration $a_q$ and the actual speed $V_F$ of the vehicle are determined, and in which furthermore

   - the yaw angular velocity ω is ascertained,
   - the slip angle β between the longitudinal axis of the vehicle and the direction of movement is determined from the transverse acceleration $a_q$, the yaw angular velocity ω and the actual vehicle speed $v_F$,

   **characterized by** the following steps:

   - the slip angle β is compared with a predetermined slip angle threshold value $β_S$,
   - a reduced set speed $v_S$ of the vehicle is calculated, starting from the actual speed $v_F$ of the vehicle when the slip angle exceeds the slip angle threshold value $β_S$, the set speed vs being reduced proportional to the slip angle β,
   - adjusting the actual vehicle speed $v_F$ to the set speed $v_S$.

2. A method according to claim 1, **characterized in that** the adjustment is effected by engine action.

3. A method according to claim 2, **characterized in that** the engine action comprises control of the engine torque.

4. A method according to claim 2, **characterized in that** when the slip angle threshold value $β_S$ is fallen below, the set speed $v_S$ of the vehicle is restored to the actual vehicle speed $v_F$ by terminating the engine action and releasing control of the engine torque again.

5. A method according to claim 4, **characterized in that** release of control of the engine torque is effected with a gradient.

6. A device for correcting the cornering speed of a vehicle having sensors for determining the speed and transverse acceleration of the vehicle, furthermore comprising

   - a sensor for the yaw angular velocity,
   - a calculation unit for calculating a slip angle β between the longitudinal axis of the vehicle and the direction of movement from the transverse acceleration $a_q$, the yaw angular velocity ω and the actual vehicle speed $v_F$,

   **characterized by**

   - a threshold value circuit (2) for comparing the slip angle β with a slip angle threshold value $β_S$,
   - a weighting circuit (4) connected to the output side of the threshold value circuit (2), which weighting circuit determines a correction value K proportional to the determined slip angle β,
   - a first summing point (6), in which a set vehicle speed $v_S$ is produced from the actual vehicle speed $v_F$ reduced by the correction value K,
   - a second summing point (8), in which the actual vehicle speed $v_F$ is compared with the set vehicle speed $v_S$ to determine a control difference value, and
   - a PD controller (10) for regulating the engine torque in dependence on the control difference value.

## Revendications

1. Procédé de régulation de la vitesse de virage d'un véhicule avec détermination de l'accélération transversale $a_q$ et de la vitesse réelle $v_F$ du véhicule, avec en outre

   - détection de la vitesse d'angle d'embardée ω,
   - détermination de l'angle de flottement β entre l'axe longitudinal du véhicule et la direction de déplacement à partir de l'accélération transversale $a_q$, de la vitesse d'angle d'embardée ω et de la a vitesse réelle du véhicule $v_F$,

   **caractérisé par** les étapes suivantes:

   - comparaison de l'angle de flottement β à une valeur de seuil d'angle de flottement $β_S$ prédéterminée,
   - calcul d'une vitesse de consigne réduite $v_S$ du véhicule à partir de la vitesse réelle $v_F$ du véhicule lors du dépassement de la valeur de seuil d'angle de flottement $β_S$ par l'angle de flottement, la vitesse de consigne $v_S$ étant réduite proportionnellement à l'angle de flottement $\beta$,
- réglage de la vitesse réelle du véhicule $v_F$ à la vitesse de consigne $v_S$.

2. Procédé selon la revendication 1, **caractérisé en ce que** le réglage s'effectue par action sur le moteur.

3. Procédé selon la revendication 2, **caractérisé en ce qu'**en tant qu'action sur le moteur est prévue la régulation du moment du moteur.

4. Procédé selon la revendication 2, **caractérisé en ce que**, lors du passage au-dessous de la valeur de seuil $\beta_S$ de l'angle de flottement, la vitesse de consigne $v_S$ du véhicule est appliquée à nouveau à la vitesse réelle $v_F$ du véhicule, l'action sur le moteur étant achevée et le moment du moteur à nouveau libéré.

5. Procédé selon la revendication 4, **caractérisé en ce que** la libération du moment du moteur s'effectue avec un gradient.

6. Dispositif de régulation de la vitesse de virage d'un véhicule à l'aide de capteurs en vue de la détermination de la vitesse et de l'accélération transversale du véhicule, présentant en outre

   - un capteur pour la vitesse d'angle d'embardée,
   - un dispositif de calcul en vue du calcul d'un angle de flottement $\beta$ entre l'axe longitudinal du véhicule et la direction de déplacement à partir de l'accélération transversale $a_q$ ,de la vitesse d'angle d'embardée $\omega$ et de la vitesse réelle $v_F$,

      **caractérisé par**

   - un circuit de valeur de seuil (2) en vue de la comparaison de l'angle de flottement $\beta$ à une valeur de seuil d'angle de flottement $\beta_S$,
   - un circuit de pondération (4) en aval du circuit de valeur de seuil d'angle de flottement, qui détecte une valeur de correction K proportionnelle à l'angle de flottement $\beta$ détecté,
   - un premier circuit de sommation (6), dans lequel une vitesse de consigne du véhicule $v_S$ est réduite de la valeur de correction K de la vitesse réelle du véhicule $v_F$,
   - un second circuit de sommation (8), dans lequel la vitesse réelle du véhicule $v_F$ est comparée à la vitesse de consigne $v_S$ en vue de la détection d'une valeur de différence de régulation et
   - un régulateur-PD 10 en vue de la régulation du moment du moteur en fonction de la valeur de différence de régulation.

Motormoment

Fahrzeuggeschwindigkeit $v_F$

PD-Regler

10

8

Sollgeschwindigkeit $v_S$

6

K

4

2

Schwimmwinkel ß